# EUROPÄISCHE PATENTSCHRIFT

(11) **EP 1 268 198 B1**
(45) Veröffentlichungstag und Bekanntmachung des Hinweises auf die Patenterteilung: **29.10.2003**
(21) Anmeldenummer: 01920999.8
(22) Anmeldetag: 20.03.2001
(51) Int. Cl.: B32B 27/04

(54) **THERMOVERFORMBARES VERBUNDMATERIAL**
THERMOFORMABLE COMPOSITE MATERIAL
MATERIAU COMPOSITE THERMODEFORMABLE

(30) Priorität: 22.03.2000 AT 4822000
(43) Veröffentlichungstag der Anmeldung: 02.01.2003
(73) Patentinhaber: Dreier, Werner, 9100 Völkermarkt (AT)
(72) Erfinder: Dreier, Werner, 9100 Völkermarkt (AT)
(74) Vertreter: Pawloy, Peter Michael, Dipl.-Ing.
(86) Internationale Anmeldenummer: AT0100075
(87) Internationale Veröffentlichungsnummer: WO01070498

(56) Entgegenhaltungen:
- EP-A- 0 671 257
- GB-A- 2 155 855

## Beschreibung

Die Erfindung betrifft ein thermoverformbares Verbundmaterial mit mindestens zwei Holzschichten und mindestens einer carbonfaserhältigen Schicht.

Weiters betrifft die Erfindung Gebrauchsgegenstände, wie beispielsweise Brillenmittelteile, Brillenbügel und allgemein Brillengestelle oder Armbänder bzw. Uhrenarmbänder.

Da Holz ein relativ günstiger Werkstoff mit sehr vorteilhaften Materialeigenschaften und sehr schönen optischen Eigenschaften ist, wurde schon lange Zeit versucht Holz auch für thermische Formgebungsverfahren zu nutzen. Hierbei sind jedoch große Probleme aufgetreten, da sich Holz nur sehr beschränkt bei Erhitzung formen lässt, und im Fall von Verbundmaterialien bei Erwärmung einzelne Holzschichten dazu neigen sich voneinander abzulösen. Daher war der Einsatz von Holz bei Gebrauchsgegenständen, bei welchen eine thermische Formbarkeit notwendig ist, wie beispielsweise Brillen, nur sehr beschränkt möglich.

Bei üblichen Brillengestellen aus Kunststoff, wird die thermische Verformbarkeit des Kunststoffes genutzt, um nach Erwärmen die Gläser in die Fassung einzufügen. Beim Abkühlen zieht sich der Kunststoff zusammen, und die Gläser sind somit über eine formund kraftschlüssige Verbindung in der Fassung gehalten.

Da Holz nachteiligerweise keine thermischen Materialeigenschaften wie Kunststoff aufweist, wurden Brillen aus Holz bisher mit Klemmschrauben hergestellt. Die Klemmschrauben sind in Unterbrechungen im Brillenmittelteil zum Einstellen der jeweiligen Rahmengröße angebracht und ermöglichen ein Einbringen der Gläser in die Fassung in einer aufgeschraubten Stellung. Nach Festziehen der Klemmschrauben zieht sich der Rahmen zusammen und die Gläser werden in der Brillenfassung gehalten.

In der WO 99/42676 A1 wird eine Möglichkeit der Verstärkung von Balken, Bindern, Trägern, Säulen bzw. stark belasteten Holzkonstruktionen vorgeschlagen, welche verschiedene Vorteile aufweisen soll. So fällt bei der Endbearbeitung von verstärkten Holzbauteilen teurer Abfall an, auch werden die Bearbeitungswerkzeuge stark beansprucht (vgl. Seite 2, Zeilen 20-25). Die Lösung gemäß der WO 99/42676 A1 besteht nun darin, dass an den Längsseiten der Verstärkungseinlagen schwächere Fasern vorgesehen werden (z.B. Hanf, Baumwolle, Polyester), vgl. Seite 3, Zeilen 12-25. Diese Fasern sind billiger und beanspruchen die zur Endbearbeitung eingesetzten Werkzeuge nicht so stark. Die Verstärkungseinlagen nehmen dabei etwa zwei Fünftel bis drei Fünftel der Länge des Bauteils ein (vgl. Seite 7, Zeilen 12-14) oder können auch über die gesamte Länge laufen. Jedenfalls sind an den Schmal(Breit-)seiten der Verstärkungseinlagen abschließend Holzteile vorgesehen (vgl. Seite 7, Zeilen 15-20). Dies bedeutet mit anderen Worten, dass die Verstärkungseinlage gemäß WO 99/42676 A1 nicht flächig über die gesamte Längs- und Breitenausdehnung des Bauteils vorgesehen ist, sondern im Bauteil eingeschlossen ist und keine homogene sich über die gesamte Fläche des Bauteils erstreckende Schicht darstellt. Demgemäß ist bei Erwärmung und Verformung eines Bauteils gemäß der WO 99/42676 A1 - sofern eine derartige Verformung aufgrund der Dicke des Bauteils überhaupt möglich sein sollte - jedenfalls kein gleichmäßiges Verschieben der einzelnen Schichten gegeneinander möglich.

Aus der EP 0 889 077 A1 ist ein carbonfaserverstärktes Holzmaterial bekannt, das zur Errichtung von großen Gebäuden, wie Schulen, Kirchen und auch Brücken verwendet werden soll. Für eine Erhöhung der Festigkeit von Holz sind einzelne Carbonfaserschichten vorgesehen, wobei diese nicht mit Hilfe eines Epoxyharzes als Bindemittel versehen sein dürfen, da Epoxyharz sehr temperaturempfindlich ist und schon bei geringer Erwärmung zähflüssig wird. Da bei diesem carbonfaserverstärktem äußerst festen Verbundmaterial keinesfalls eine thermische Verformbarkeit gegeben sein darf, da es ansonsten nicht als Baumaterial zu verwenden wäre, werden als Bindemittel resorcinhältige bzw. phenolhältige Verbindungen vorgeschlagen, durch deren Verwendung das Verbundmaterial auch bei Erwärmung äußerst starr bleibt.

In der GB 2 155 855 A schließlich wird ein Verbundmaterial geoffenbart, welches pyrolysierte Holzfurniere enthält. Gemäß Seite 1, Zeilen 49-56, werden hiefür drei spezifische Zusammensetzungen herangezogen, nämlich (a) die Verwendung von pyrolysierten Holzfurnieren für Faser-verstärkte Laminate, wobei gemäß Seite 2, Zeilen 32 bis 36, zur Bildung der Laminate zwei verschiedene Harzsysteme mit Härtern verwendet werden, (b) Holzlaminate ohne Faserverstärkung, jedoch mit einer pyrolysierten Holzfurnierschicht, welche wiederum mit Hilfe der zuvor genannten Harzzusammensetzung mit Härtern verbunden sind, sowie (c) Laminate ohne Faserverstärkung, welche mittels eines thermoplastischen Klebstoffes verbunden werden.

Ziel der Erfindung ist es hingegen ein Verbundmaterial der eingangs angeführten Art zu schaffen, das sich bei Erwärmung verformen lässt, etwa durch Verschieben der einzelnen Schichten gegeneinander, und das bei seiner Erstarrung seine kompakte Verformung beibehält, ohne dass sich einzelne Schichten voneinander lösen. Ein weiteres Ziel der Erfindung ist es, Gebrauchsgegenstände, wie z.B. ein Brillengestell, zu schaffen, die im Wesentlichen aus Holz bestehen, wobei im Falle von Brillengestellen jedoch keine Klemmschraube zur Fixierung der Gläser vorgesehen sein muss.

Das Ziel wird erfindungsgemäß mit dem thermoverformbaren Verbundmaterial nach Anspruch 1 dadurch erreicht, dass zwischen den mindestens zwei Holzschichten mindestens eine Carbonfaserschicht vorgesehen ist, wobei die Schichten des sich über die gesamte Fläche der Schichten erstreckenden Verbundmaterials mittels eines thermisch erweichbaren Klebstoffes verklebt sind.

Auf diese Weise lassen sich die Schichten bei Erwärmung des Verbundmaterials gegeneinander verschieben und biegen, ohne dass ein Abblättern einer Holzschicht erfolgt. Daher kann mit Hilfe dieses Verbundmaterials vorteilhafterweise eine Vielzahl verschiedenster Gebrauchsgegenstände mit einem hohen Anteil an Holz hergestellt werden. In Abhängigkeit von der jeweiligen Anwendung weisen die Holzschichten vorzugsweise eine Dicke von etwa 0,1 - 1 mm auf.

Um ein möglichst isotropes Verbundmaterial zu erhalten, ist es vorteilhaft, wenn die Carbonfaserschicht einander kreuzende Carbonfasern aufweist.

Es wird vorteilhafterweise ebenfalls ein isotropes Verbundmaterial erhalten, wenn mindestens zwei Carbonfaserschichten vorgesehen sind, wobei die Carbonfasern einer Schicht zu den jeweils anderen Carbonfasern senkrecht stehen.

Um ein möglichst homogenes Verbundmaterial zu erhalten, bei dem die starke Inhomogenität von Holz ausgeglichen wird, ist es von Vorteil, wenn die Faserrichtungen der beiden jeweils an die mindestens eine Carbonfaserschicht angrenzenden Holzschichten senkrecht zueinander stehen.

Da das Verbundmaterial bei Erwärmung verformbar sein soll und nach Abkühlung wieder ein stabiles, kompaktes seine Verformung beibehaltendes Material bilden soll, ist es von Vorteil, wenn als Klebstoff zum Verkleben der Carbonfaserschicht(en) ein Polyurethanklebstoff vorgesehen ist, der die obengenannten Eigenschaften bei Erwärmung aufweist.

Für eine optisch unauffällige Schicht, welche trotzdem die gewünschte Verformbarkeit und Materialstabilität schafft, hat sich als günstig herausgestellt, wenn die Carbonfaserschicht eine Dicke von im Wesentlichen 0,2 mm aufweist.

Um eine kompakte Carbonfaserschicht zu schaffen, welche zuverlässig mit den angrenzenden Holzschichten verbunden werden kann und um ein Verbundmaterial zu schaffen, das bei Erwärmung verformbar ist, ist es vorteilhaft, wenn die Carbonfaserschicht mit Epoxyharz imprägniert ist.

Besonders günstige Materialeigenschaften weist ein Verbundmaterial auf, bei dem mindestens zwei Holzschichten zur Bildung eines Blocks direkt miteinander mittels eines thermisch erweichbaren, wasserfesten Holzleims verklebt sind, wobei die Faserrichtungen von benachbarten Holzschichten zueinander verdreht angeordnet sind. Da das Verbundmaterial thermisch verformbar sein soll, muss auch der mehrere Holzschichten verbindende Holzleim bei Erwärmung erweichen, und nach Abkühlen seine klebende Wirkung wiedererlangen. Um die anisotropen Eigenschaften von Holz auszugleichen, werden die Faserrichtungen der einzelnen Holzschichten verdreht zueinander angeordnet, um ein möglichst isotropes Verbundmaterial zu erhalten.

Wenn als Klebstoff zum Verkleben der mindestens zwei Holzschichten ein PVAc-Leim vorgesehen ist, erfolgt vorteilhafterweise eine schnelle Verbindung zwischen den Holzschichten und es sind nur äußerst kurze Presszeiten zum Fügen der Holzschichten notwendig.

Ein äußerst isotropes Verbundmaterial erhält man, wenn die Faserrichtungen der Holzschichten in einem Block sternförmig angeordnet sind, da hierdurch die sehr unterschiedlichen Materialeigenschaften von Holz in bzw. quer zur Faserrichtung ausgeglichen werden. Sollte daher ein Block mit zwei Holzschichten vorliegen, so sind diese senkrecht zueinander angeordnet, bei vier Holzschichten wären die Faserrichtungen um jeweils 45° zueinander verdreht, bei sechs Holzschichten um 30°, usw.. Durch diese sternförmige Anordnung wird somit ein äußerst homogenes Verhalten des Verbundmaterials erreicht.

Für eine gute Isotropie des Verbundmaterials bei nicht allzugroßem Fertigungsaufwand, hat sich als vorteilhaft erwiesen, wenn ein aus 2 bis 6 Holzschichten bestehender Block zwischen zwei Carbonfaserschichten vorgesehen ist.

Für die Herstellung eines Brillenmittelteils aus dem Verbundmaterial ist es günstig, wenn an eine Carbonfaserschicht eine aus einer Holzschicht bestehende Dekorschicht und an die andere Carbonfaserschicht ein aus bis zu 20 Holzschichten bestehender Endblock angrenzt, da in dem Endblock ein Scharniergelenk für die gelenkige Verbindung mit dem Brillenbügel anzubringen ist bzw. im Mittelteil die Nasenauflage einstückig hergestellt werden kann. Ein derartiges Verbundmaterial weist dabei vorzugsweise eine gesamte Dicke von bis zu 1,5 cm auf.

Der erfindungsgemäße Gebrauchsgegenstand der eingangs angeführten Art, ist dadurch gekennzeichnet, dass er zumindest teilweise aus einem Verbundmaterial nach einem der Ansprüche 1 bis 12 besteht. Durch Einsatz des Verbundmaterials ist der Gebrauchsgegenstand thermisch verformbar und es kann eine Vielzahl unterschiedlichster Gebrauchsgegenstände aus dem Verbundmaterial hergestellt werden.

Wenn ein Brillenmittelteil und/oder Brillenbügel zumindest teilweise aus dem Verbundmaterial bestehen, dann können vorteilhafterweise die Gläser nach Erwärmung des Brillenmittelteils eingefügt werden, welche nach Abkühlen über eine reib- und formschlüssige Verbindung fest im Brillenmittelteil gehalten werden. Somit kann das Vorsehen eines offenen Brillenmittelgestells - wie dies bei Holzbrillen bisher üblich war -, deren Öffnung zur Fixierung der Brillengläser über eine Klemmschraube verbunden ist, entfallen.

Daher kann der Brillenmittelteil aus einem in sich geschlossenen Verbundmaterial bestehen, in welchem nach Erwärmung ohne weitere Öffnung im Brillenmittelteil die Gläser eingesetzt werden können.

Nachdem aus einem Ausgangs-Verbundmaterial die Strukturen eines Brillengestells gefräst worden sind, ist es günstig, wenn der Brillenmittelteil und/oder die Brillenbügel mit Hilfe von Wärmebehandlung verformbar sind, um eine anatomisch angepasste Form des Brillengestells zu erhalten.

Ebenfalls kann vorteilhafterweise ein optisch äußerst attraktiver, umweltfreundlicher und gut hautverträglicher Gebrauchsgegenstand geschaffen werden, wenn ein Armband bzw. ein Uhrenarmband zumindest teilweise aus dem Verbundmaterial besteht.

Die Erfindung wird nachstehend anhand von in der Zeichnung dargestellten bevorzugten Ausführungsbeispielen, auf die sie jedoch nicht beschränkt sein soll, noch weiter erläutert. Im Einzelnen zeigen in der Zeichnung:
Fig. 1 eine perspektivische auseinandergezogene Ansicht eines Verbundmaterials;
Fig. 2 eine perspektivische geschnittene Ansicht eines Verbundmaterials mit zwei Carbonfaserschichten; und
Fig. 3 ein Verbundmaterial im Schnitt.

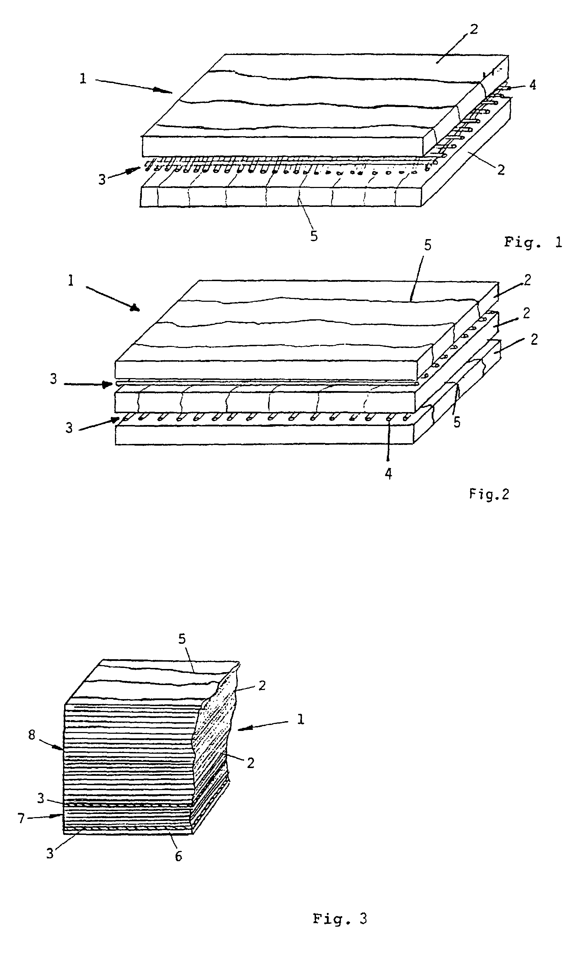

Fig. 1 zeigt eine perspektivische auseinandergezogene Ansicht eines Verbundmaterials 1. Das in Fig. 1 gezeigte Verbundmaterial 1 besteht aus insgesamt drei Schichten, wobei zwischen zwei Holzschichten 2 eine Carbonfaserschicht 3 vorgesehen ist. Die Carbonfaserschicht 3 besteht aus einander kreuzenden Carbonfasern 4, welche mit einem Epoxyharz imprägniert sind. Die Carbonfaserschicht 3, welche mittels eines Polyurethanklebstoffs, z.B. ICEMA® R145/44 von der Firma H.B. Fuller GmbH, mit den beiden Holzschichten 2 mit Hilfe von Druck- und Wärmeaufbringung verklebt ist, besteht vorzugsweise aus einem HexForm™ - Carbongewebe, das von der Firma HEXCEL Composites Ges.m.b.H. angeboten wird. Die Carbonfaserschicht 3 mit einander kreuzenden Carbonfasern 4 dient als eine Art Gleitschicht zwischen den beiden Holzschichten 2 bei Erwärmung.

Um ein möglichst isotropes Verbundmaterial zu erhalten dessen Materialeigenschaften in alle Richtungen im Wesentlichen ident sind, sind die Faserrichtungen 5 der Holzschichten 2 senkrecht zueinander angeordnet.

In Fig. 2 ist ein Verbundmaterial 1 gezeigt, bei dem zwei Carbonfaserschichten 3 vorgesehen sind. Die beiden Carbonfaserschichten 3 weisen Carbonfasern 4 auf, welche senkrecht zueinander stehen, um wiederum ein möglichst isotropes Verbundmaterial 1 zu erhalten. Die an eine Carbonfaserschicht 3 angrenzenden Holzschichten 2 weisen jeweils senkrecht zueinander stehende Faserrichtungen 5 auf, um die bezüglich der Faserrichtung 5 sehr unterschiedlichen Festigkeitseigenschaften der Holzschichten 2 auszugleichen.

In Fig. 3 ist ein erfindungsgemäßes Verbundmaterial 1 gezeigt, welches zwei Carbonfaserschichten 3 und eine Vielzahl von Holzschichten 2 aufweist. Die Holzschichten 2 lassen sich hierbei in eine in Fig. 3 zu unterst vorgesehene Dekorschicht 6, einen aus sechs Holzschichten bestehenden Mittelblock 7, der zwischen den beiden Carbonfaserschichten 3 vorgesehen ist, und einen aus ca. 20 Holzschichten bestehenden Endblock 8 unterteilen.

Die im Mittelblock 7 und im Endblock 8 direkt verklebten Holzschichten 2 sind mittels eines bei Erwärmung erweichenden, wasserfesten Holzleims, vorzugsweise eines PVAc-Holzleims, z.B. RAKOLL®-GLX-3-Holzleim von der Firma H.B. Fuller GmbH, verklebt.

Um wiederum ein möglichst isotropes Verbundmaterial zu erhalten, sind die an die jeweiligen Carbonschichten angrenzenden Holzschichten 2 mit jeweils senkrecht zueinander stehenden Faserrichtungen 5 vorgesehen. Die Faserrichtungen 5 der Holzschichten im Mittelblock 7 bzw. im Endblock 8 sind sternförmig zueinander verdreht, d.h. die sechs Holzschichten des Mittelblocks 7 sind fortlaufend jeweils um 30° zueinander verdreht, um möglichst eine Ausrichtung einer Faserrichtung über 360° gesehen zu erreichen. Die Faserrichtungen 5 des Endblocks 8 sind dementsprechend geringer zueinander verdreht, wobei sich bei 20 Holzschichten eine Verdrehung von jeweils ca. 9° ergibt. Es ist ebenfalls möglich, dass in einem Block mehrfach die Faserrichtungen 5 der Holzschichten 2 um jeweils 45°, 90°, usw. verdreht sind, und somit eine Art Unterblock aus beispielsweise zwei oder vier Holzschichten 2 entsteht.

Das in Fig. 3 gezeigte Verbundmaterial 1 eignet sich besonders gut zur Herstellung von Brillenmittelteilen, da im relativ dicken Endblock 8 ausreichend Platz für die Anbringung eines Scharniergelenks zur Verbindung mit den Brillenbügeln vorhanden ist.

## Patentansprüche

1. Thermoverformbares Verbundmaterial (1), umfassend Holzschichten (2) und mindestens eine carbonfaserhältige Schicht (3), wobei die Holzschichten (2) zur Bildung eines Blocks (7) direkt miteinander verklebt sind, **dadurch gekennzeichnet, dass** die zur Bildung des Blocks (7) verklebten Holzschichten (2) mittels eines thermisch erweichbaren, wasserfesten Holzleims verklebt sind, wobei die Faserrichtungen (5) von benachbarten Holzschichten (2) zueinander verdreht angeordnet sind, und weiters zwischen den Holzschichten (2) mindestens eine sich über die gesamte Fläche der Schichten erstreckende Carbonfaserschicht (3) vorgesehen ist, welche mit den Holzschichten mittels eines thermisch erweichbaren Klebstoffes verklebt ist.

2. Verbundmaterial nach Anspruch 1, **dadurch gekennzeichnet, dass** die Carbonfaserschicht (3) einander kreuzende Carbonfasern (4) aufweist.

3. Verbundmaterial nach Anspruch 1, **dadurch gekennzeichnet, dass** mindestens zwei Carbonfaserschichten (3) vorgesehen sind, wobei die Carbonfasern einer Schicht zu den jeweils anderen Carbonfasern (4) senkrecht stehen.

4. Verbundmaterial nach einem der Ansprüche 1 bis 3, **dadurch gekennzeichnet, dass** die Faserrichtungen (5) der beiden jeweils an die mindestens eine Carbonfaserschicht (3) angrenzenden Holzschichten (2) senkrecht zueinander stehen.

5. Verbundmaterial nach Anspruch 4, **dadurch gekennzeichnet, dass** als Kleber zum Verkleben der Carbonfaserschicht(en) (3) ein Polyurethanklebstoff vorgesehen ist.

6. Verbundmaterial nach einem der Ansprüche 1 bis 5, **dadurch gekennzeichnet, dass** die Carbonfaserschicht (3) eine Dicke von im Wesentlichen 0,2 mm aufweist.

7. Verbundmaterial nach einem der Ansprüche 1 bis 6, **dadurch gekennzeichnet, dass** die Carbonfaserschicht (3) mit Epoxyharz imprägniert ist.

8. Verbundmaterial nach einem der Anspüche 1 bis 7, **dadurch gekennzeichnet, dass** als Klebstoff zum Verkleben der Holzschichten (2) ein PVAc-Leim vorgesehen ist.

9. Verbundmaterial nach einem der Ansprüche 1 bis 8, **dadurch gekennzeichnet, dass** die Faserrichtungen (5) der Holzschichten (2) im Block (7) sternförmig angeordnet sind.

10. Verbundmaterial nach einem der Ansprüche 1 bis 9, **dadurch gekennzeichnet, dass** ein aus 2 bis 6 Holzschichten (2) bestehender Block (7) zwischen zwei Carbonfaserschichten (3) vorgesehen ist.

11. Verbundmaterial nach Anspruch 10, **dadurch gekennzeichnet, dass** an eine Carbonfaserschicht (3) eine aus einer Holzschicht (2) bestehende Dekorschicht (6) und an die andere Carbonfaserschicht (3) ein aus bis zu 20 Holzschichten (2) bestehender Endblock (8) angrenzt.

12. Gebrauchsgegenstand, **dadurch gekennzeichnet, dass** er zumindest teilweise aus einem Verbundmaterial (1) nach einem der Ansprüche 1 bis 11 besteht.

13. Gebrauchsgegenstand nach Anspruch 12, **dadurch gekennzeichnet, dass** ein Brillenmittelteil und/oder Brillenbügel zumindest teilweise aus dem Verbundmaterial (1) bestehen.

14. Gebrauchsgegenstand nach Anspruch 13, **dadurch gekennzeichnet, dass** der Brillenmittelteil aus einem in sich geschlossenen Verbundmaterial (1) besteht.

15. Gebrauchsgegenstand nach einem der Ansprüche 13 oder 14, **dadurch gekennzeichnet, dass** der Brillenmittelteil und/oder die Brillenbügel mit Hilfe von Wärmebehandlung verformbar sind.

16. Gebrauchsgegenstand nach Anspruch 12, **dadurch gekennzeichnet, dass** ein Armband bzw. ein Uhrenarmband zumindest teilweise aus dem Verbundmaterial (1) besteht.

## Claims

1. A thermally deformable composite material (1) comprising wood layers (2) and at least one carbon-fiber-containing layer (3), the wood layers (2) being directly glued to each other so as to form a block (7), **characterised in that** the wood layers (2) glued to each other for forming the block (7) are glued together by means of a thermally softenable, water-resistant wood glue, wherein the fiber orientations (5) of neighbouring wood layers (2) are arranged to be rotated relative to each other, and furthermore at least one carbon fiber layer (3) extending over the entire area of the layers is provided between the wooden layers (2), which carbon fiber layer is glued together with the wooden layers by means of a thermally softenable adhesive.

2. A composite material according to claim 1, **characterised in that** the carbon fiber layer (3) comprises carbon fibers (4) crossing each other.

3. A composite material according to claim 1, **characterised in that** at least two carbon fiber layers (3) are provided, the carbon fibers of one layer being perpendicular to the respective other carbon fibers (4).

4. A comosite material according to any one of claims 1 to 3, **characterised in that** the fiber orientations (5) of the two wood layers (2) that are each adjacent to the at least one carbon fiber layer (3) are perpendicular to each other.

5. A composite material according to claim 4, **characterised in that** a polyurethane adhesive is used as the adhesive for gluing the carbon fiber layer(s) (3).

6. A composite material according to any one of claims 1 to 5, **characterised in that** the carbon fiber layer (3) has a thickness of substantially 0.2 mm.

7. A composite material according to any one of claims 1 to 6, **characterised in that** the carbon fiber layer (3) is impregnated with epoxy resin.

8. A composite material according to any one of claims 1 to 7, **characterised in that** a PVAc glue is provided as the adhesive for gluing the wood layers (2).

9. A composite material according to any one of claims 1 to 8, **characterised in that** the fiber orientations (5) of the wood layers (2) in the block (7) are arranged in star shape.

10. A composite material according to any one of claims 1 to 9, **characterised in that** a block (7) made up of from 2 to 6 wood layers (2) is provided between two carbon fiber layers (3).

11. A composite material according to claim 10, **characterised in that** a decorative layer (6) made of a wood layer (2) is adjacent to one carbon layer (3), and an end block (8) made up of up to 20 wood layers (2) is adjacent to the other carbon fiber layer (3).

12. An article of daily use, **characterised in that** it is at least partially made of a composite material (1) according to any one of claims 1 to 11.

13. Article of daily use according to claim 12, **characterised in that** a spectacle middle part and/or a spectacle bow consists at least partially of the composite material (1).

14. Article of daily use according to claim 13, **characterised in that** the spectacle middle part is made of a composite material (1) closed in itself.

15. An article of daily use according to any one of claims 13 or 14, **characterised in that** the spectacle middle part and/or the spectacle bows are deformable by a thermal treatment.

16. An article of daily use according to claim 12, **characterised in that** a bracelet or a watchband are at least partially made of the composite material (1).

## Revendications

1. Matériau composite thermodéformable (1), comprenant des couches de bois (2) et au moins une couche contenant des fibres de carbone (3), où les couches de bois (2) sont collées directement l'une à l'autre pour former un bloc (7), **caractérisé en ce que** les couches de bois (2) collées pour former le bloc (7) sont collées à l'aide d'une colle à bois pouvant être thermiquement ramollie, résistant à l'eau, où les directions de fibres (5) des couches de bois (2) voisines sont disposées en travers l'une par rapport à l'autre et de plus, est prévu entre les couches de bois (2), au moins une couche de fibres de carbone s'étendant sur toute la surface des couches de bois (2), qui est collée aux couches de bois à l'aide d'une colle pouvant être thermiquement ramollie.

2. Matériau composite selon la revendication 1, **caractérisé en ce que** la couche de fibres de carbone (3) présente des fibres de carbone (4) entrelacées.

3. Matériau composite selon la revendication 1, **caractérisé en ce qu'**au moins deux couches de fibre de carbone (3) sont prévues, où les fibres de carbone d'une couche sont perpendiculaires aux autres fibres de carbone (4).

4. Matériau composite selon l'une quelconque des revendications 1 à 3, **caractérisé en ce que** les directions des fibres (5) des deux couches de bois (2) chaque fois voisines de la au moins une couche de fibres de carbone (3) sont perpendiculaires l'une par rapport à l'autre.

5. Matériau composite selon la revendication 4, **caractérisé en ce que** comme colle pour encoller la ou les couches en fibres de carbone (3), on prévoit une colle polyuréthanne.

6. Matériau composite selon l'une quelconque des revendications 1 à 5, **caractérisé en ce que** la couche en fibre de carbone (3) présente une épaisseur de essentiellement 0,2 mm.

7. Matériau composite selon l'une quelconque des revendications 1 à 6, **caractérisé en ce que** la couche de fibres de carbone (3) est imprégnée de résine époxy.

8. Matériau composite selon l'une quelconque des revendications 1 à 7, **caractérisé en ce que** comme colle pour l'encollage des couche de bois (2), on prévoit une colle PVAc.

9. Matériau composite selon l'une quelconque des revendications 1 à 8, **caractérisé en ce que** les directions des fibres (5) des couche de bois (2) dans le bloc (7) sont en étoile.

10. Matériau composite selon l'une quelconque des revendications 1 à 9, **caractérisé en ce qu'**un bloc (7) consistant en 2 à 6 couches de bois (2) est prévu entre deux couches de fibres de carbone (3).

11. Matériau composite selon la revendication 10, **caractérisé en ce que** sur une couche de fibres de carbone (3), se trouve une couche de décor (6) consistant en une couche de bois (2) et sur l'autre couche de fibres de carbone (3), se trouve un bloc final (8) consistant en jusqu'à 20 couches de bois (2).

12. Objet usuel **caractérisé en ce qu'**il consiste au moins partiellement, en un matériau composite (1) selon l'une quelconque des revendications 1 à 11.

13. Objet usuel selon la revendication 12, **caractérisé en ce qu'**une partie de lunette et/ou branche de lunette consiste au moins partiellement en le matériau composite (1).

14. Objet usuel selon la revendication 13, **caractérisé en ce que** la partie de lunette consiste en un matériau composite (1) fermé.

15. Objet usuel selon l'une quelconque des revendications 13 ou 14, **caractérisé en ce que** la partie de lunette et/ou la branche de lunette est déformable à l'aide d'un traitement thermique.

16. Objet usuel selon la revendication 12, **caractérisé en ce qu'**un bracelet ou une montre-bracelet consiste au moins partiellement en le matériau composite (1).
